# EUROPEAN PATENT APPLICATION

(11) **EP 4 572 091 A1**
(43) Date of publication of application: **18.06.2025**
(21) Application number: 23307174.5
(22) Date of filing: 11.12.2023
(51) Int. Cl.: H02K 1/02, H02K 1/27, H02K 15/03

(54) **SYNCHRONOUS MOTOR COMPRISING AT LEAST ONE STATOR AND A ROTOR, THE ROTOR COMPRISING A ROTOR PERMANENT MAGNET, METHOD FOR MANUFACTURING A ROTOR PERMANENT MAGNET OF A ROTOR FOR A SYNCHRONOUS MOTOR**

(71) Applicant: WILO SE, 44263 Dortmund (DE)
(72) Inventor: BOULET, Thomas, 44263 Dortmund (DE); MAES, Sylvere, 44263 Dortmund (DE)
(74) Representative: Schwöbel, Thilo K.

(57) **Abstract**

The invention relates to a synchronous motor comprising at least one stator and a rotor, the rotor comprising a rotor permanent magnet,
characterized in that the rotor comprises - besides the rotor permanent magnet - a shaft element, wherein the rotor permanent magnet comprises a first permanent magnet element as well as a second permanent magnet element, wherein the first permanent magnet element mainly comprises, or consists of, a first hard magnetic material and wherein the second permanent magnet element mainly comprises, or consists of, a second hard magnetic material.

## Description

The present invention relates to a synchronous motor comprising at least one stator and a rotor, the rotor comprising a rotor permanent magnet.

Furthermore, the present invention relates to a pump comprising a synchronous motor according to the present invention.

Furthermore, the present invention relates to a method for manufacturing a rotor permanent magnet of a rotor for a synchronous motor according to the present invention.

### BACKGROUND OF THE INVENTION

Synchronous motors are well known and are nowadays used in particular as drives, e.g., for pumps, especially water pumps.
Such motors often comprise rotating rotors that have a metallic shaft and comprise a rotor permanent magnet, typically mounted on the shaft; such rotors typically deliver a torque to drive an actuator like, e.g., a pump unit).
Such rotors, having a metallic shaft and comprising a rotor permanent magnet, are typically arranged such that the rotor permanent magnet that is arranged around the metallic shaft such as to interact - in the assembled electric motor - with the corresponding stator arrangement, wherein such a rotor permanent magnet, being arranged around the metallic shaft, comprises at least one permanent magnet element.

Hence, such rotor permanent magnets typically comprise - at least in part, or, regarding certain areas thereof, e.g., embedded therein - one or a plurality of permanent magnet elements, wherein such one or a plurality of permanent magnet elements are typically made of a hard magnetic material (i.e. having a comparatively high remanence or magnetic remanence).
While certain hard magnetic materials - such as, e.g., rare earths hard magnetic materials, typically having a higher magnetic coercivity, compared, e.g. to ferrites - are more sensitive, especially with regard to corrosion, if exposed to water and/or humidity, other hard magnetic materials, e.g. ferrites, are less sensitive to water contact (or stable in water); however, such less sensitive hard magnetic materials, typically, have a lower magnetic remanence.
Hence, it is generally and conventionally known - regarding electric motors used for, e.g., water pumps - to use rotors that have a rotor permanent magnet with at least one permanent magnet element in a manner such that,
-- either, a permanent magnet element is (allowed to be) exposed to water or humidity and, consequently, needs to be made of, or comprise, a hard magnetic material, e.g. ferrites, that are less sensitive to water contact (or stable in water),
-- or in a manner such that the at least one permanent magnet element of the rotor permanent magnet comprises a high magnetic coercivity-hard magnetic material (e.g. a rare earths hard magnetic material), wherein such a permanent magnet element is enclosed in a watertight manner, i.e. shielded from water contact, e.g. by means of using, as part of the rotor permanent magnet, a watertight enclosure, e.g. a water tight enclosure made of metal (and, e.g., welded to the shaft element) or a watertight enclosure by means of overmolding the at least one permanent magnet element (of the rotor permanent magnet comprising the high magnetic remanence-hard magnetic material that is water-sensitive) by means of a protective encapsulation that is, e.g., formed by beans of high-pressure injection.
Both afore-mentioned known solutions have drawbacks, including, typically,
-- lower electro-magnetic performances (e.g. increased phase currents) if hard magnetic materials, e.g. ferrites, are used that are less sensitive to water contact, and
-- the effort (and additional costs) to realize a watertight enclosure in case of using a high magnetic remanence-hard magnetic material that needs to be shielded from water and/or humidity.

### SUMMARY OF THE INVENTION

An object of the present invention is to provide a technically simple, effective and cost-effective solution for providing a rotor for a synchronous motor, wherein the rotor comprises, besides a shaft element, a rotor permanent magnet that is configured such that it has a comparatively elevated electro-magnetic performance and especially does not necessarily require a watertight enclosure of a high magnetic remanence-hard magnetic material that needs to be shielded from water and/or humidity. A further object of the present invention is to provide a corresponding pump comprising a synchronous motor according to the present invention, especially for hydraulic systems and especially for pumping water, as well as to provide a corresponding method for manufacturing a rotor permanent magnet of a rotor for a synchronous motor.

The object of the present invention is achieved by a synchronous motor comprising at least one stator and a rotor, the rotor comprising a rotor permanent magnet, characterized in that the rotor comprises - besides the rotor permanent magnet - a shaft element, wherein the rotor permanent magnet comprises, or consists of, a first permanent magnet element as well as a second permanent magnet element, wherein the first permanent magnet element mainly comprises, or consists of, a first hard magnetic material and wherein the second permanent magnet element mainly comprises, or consists of, a second hard magnetic material.

It is thereby advantageously possible according to the present invention to have a higher degree of flexibility in the design of the rotor permanent magnet and, especially, to be able to provide the rotor permanent magnet in a manner such that both the first permanent magnet element and the second permanent magnet element contributes to the magnetic performances of the synchronous motor.
Furthermore, it is advantageously possible to realize (by means of using such a rotor design, having such a rotor permanent magnet) an electric motor having advantageous electrical or electro-magnetic properties and/or performances. E.g. (but not necessarily), such a rotor permanent magnet is able to be used in a single-phase (or more than single-phase) synchronous motor that comprises, e.g., at least one stator winding, e.g., a U-shaped laminated stator core with, e.g., two poles. The rotor is arranged between the poles and comprises the rotor permanent magnet.

Especially according to the present invention, it is possible to realize the first and second permanent magnet element in two different steps, e.g. with the first permanent magnet element being realized as an inner core, and the second permanent magnet element being realized as an outer core.

Especially according to the present invention, it is advantageously possible and preferred that both the first hard magnetic material and the second hard magnetic material are moldable materials.

It is thereby advantageously possible to realize the rotor permanent magnet (or, the rotor besides the shaft element) by means of injection molding of the first hard magnetic material and the second hard magnetic material, especially by means of overmolding the second hard magnetic material onto the first hard magnetic material, i.e. overmolding the second permanent magnet element onto the first permanent magnet element. Hence, it is advantageously possible, according to the present invention, to combine two (or even more) injection (molding) steps of a plasto-magnetic material (or of a plurality of plasto-magnetic materials), and, especially, to use the last one to protect the other(s) from exterior contact, e.g. from contact with a fluid.

According to the present invention, it is advantageously furthermore possible and preferred that the first and second hard magnetic materials are located axially adjacent (to one another) along a part of the shaft element and parallel to the rotor axis of rotation,
wherein especially the radial extension of both the first and the second hard magnetic materials is essentially identical.

It is thereby advantageously possible to realize the rotor permanent magnet (or, the rotor besides the shaft element) easily and in a cost-effective manner, especially by means of using two injection-molding steps.

According to the present invention, it is advantageously furthermore possible and preferred that the first hard magnetic material is exclusively located, with regard to the rotor axis of rotation, in a radially inner area of the rotor permanent magnet and wherein the second hard magnetic material is mainly located, with regard to the rotor axis of rotation, in a radially outer area of the rotor permanent magnet.

It is thereby advantageously possible, according to the present invention, that the second hard magnetic material (i.e. the second permanent magnet element) is able to - at least radially - protect the first hard magnetic material (i.e. the first permanent magnet element).

Especially according to the present invention, it is advantageously possible and preferred that - along a radially outer surface of the first hard magnetic material - the second hard magnetic material is radially adjacent to the first hard magnetic material.

It is thereby advantageously possible to realize and implement the inventive rotor or rotor permanent magnet in a comparatively simple and efficient manner.

According to the present invention, it is furthermore advantageously possible and preferred that the first permanent magnet element is shaped essentially cylindrically, especially around an outer cylindrical or essentially cylindrical surface of the shaft element, in an area of and/or around the shaft element corresponding to a first maximum radius, and wherein the second permanent magnet element is shaped cylindrically, especially around an outer essentially cylindrical or essentially cylindrical surface of the first permanent magnet element, in an area around the first permanent magnet element corresponding to a second maximum radius.

It is thereby advantageously possible, according to the present invention, that the first and second hard magnetic materials (i.e. the first and second permanent magnet elements) are realized as concentrical, more or less cylinder-shaped, elements.

Especially according to the present invention, it is advantageously possible and preferred that both the first permanent magnet element and the second permanent magnet element extend along a certain length parallel to the rotor axis of rotation, this length especially being inferior to the length of the shaft element.

It is thereby advantageously possible to realize and implement the inventive rotor or rotor permanent magnet in a comparatively simple and efficient manner; especially, it is advantageously possible to provide the possibility that the shaft element is (axially) longer than the first and second permanent magnet elements and is, thus, able to transmit (or exert) torque to a downstream actuator such as a pump unit.

According to the present invention, it is furthermore advantageously possible and preferred that the first permanent magnet element is shaped essentially cylindrically, especially around an outer cylindrical or essentially cylindrical surface of the shaft element, in an area of and/or around the shaft element corresponding to a first maximum radius, wherein, axially, the first permanent magnet element extends along a certain length parallel to the rotor axis of rotation, and wherein the second permanent magnet element extends, parallel to the rotor axis of rotation, along a total length of extension of the second permanent magnet element, wherein
-- along the length of extension of the first permanent magnet element parallel to the rotor axis of rotation, the second permanent magnet element is shaped cylindrically, especially around an outer cylindrical or essentially cylindrical surface of the first permanent magnet element, in an area around the first permanent magnet element corresponding to a second maximum radius, and
-- extending beyond the first permanent magnet element parallel to the rotor axis of rotation - especially at both ends of the first permanent magnet element-, the second permanent magnet element is shaped cylindrically, especially around an outer cylindrical or essentially cylindrical surface of the shaft element likewise in an area around the shaft element corresponding to the second maximum radius.

It is thereby advantageously possible to realize and implement the inventive rotor or rotor permanent magnet in a comparatively simple and efficient manner, and, especially, to provide the second permanent magnet element such that it completely surrounds the first permanent magnet element (and both surrounding a certain part - along its axial extension - of the shaft element); hence, the first permanent magnet element corresponds, at least roughly and assuming a cylindrical outer surface of the shaft element, to a cylindrical shell (having an outer shell diameter of twice the first maximum radius) and the second permanent magnet element corresponds, at least roughly and assuming a cylindrical outer surface of the first permanent magnet element, to a cylindrical shell (having an outer shell diameter of twice the second maximum radius).

Furthermore, it is advantageously possible and preferred according to the present invention that - with the exception of the shaft element - the second permanent magnet element completely surrounds the first permanent magnet element,
wherein especially - and again with the exception of the shaft element - the second hard magnetic material completely surrounds the first hard magnetic material,
wherein especially the first hard magnetic material is thereby protected, or sealed, from external fluids, especially from external water or humidity in external air, i.e. external to the rotor and/or to the rotor permanent magnet.

It is thereby advantageously possible to realize and implement the inventive rotor or rotor permanent magnet in a comparatively simple and efficient manner; especially it is thereby advantageously possible to be able to use - as the first permanent magnet element and/or as the first hard magnetic material - a material that is sensitive to water and/or humidity (but that has, e.g., superior magnetic properties (compared to the second permanent magnet element and/or the second hard magnetic material)) and to protect (or, to seal or enclose) the first permanent magnet element and/or the first hard magnetic material by means of the second permanent magnet element and/or as the second hard magnetic material. Especially, it is thereby advantageously possible - especially by means of providing a corresponding shape of the first and/or second permanent magnet element and/or hard magnetic material - to enhance the magnetic properties of the first permanent magnet element and/or first hard magnetic material by means of the second permanent magnet element and/or second hard magnetic material. Especially, it is advantageously possible, according to the present invention, to shape the first and/or second permanent magnet element and/or hard magnetic material such that - in a radial cross section, i.e. a cross section perpendicular to the axis of rotation of the rotor - the first and/or second permanent magnet element and/or hard magnetic material are shaped differently than just cylindrically (i.e. a cylindrical shape meaning to have a respective (radially) outer surface that is radially equally distanced from the axis of rotation of the rotor), especially by means of the (radially) outer surface of the first and/or second permanent magnet element and/or hard magnetic material being varyingly distanced from the axis of rotation of the rotor, e.g. in an undulated manner or varying around or along the circumference of the rotor permanent magnet.
Especially, this leads to the following advantages:
Rare earth magnetic materials usually used for their magnetic properties are typically sensitive to corrosion when placed in contact with water. By means of the second hard magnetic material (e.g. a hard ferrite material) completely surrounding the first hard magnetic material (e.g. a rare earth magnetic material), the rare earth magnetic material is protected by the injection molded ferrite layer, and it is advantageously possible that both materials - i.e. the whole rotor volume - contribute to the rotor magnetic properties. The inner injected layer(s), i.e. the first permanent magnet element, typically includes rare earth metals, such as NdFeB or SmFeN (injection molded in isotropic or anisotropic manner), while the outer layer, i.e. the second permanent magnet element, typically includes, or consists of, injection molded ferrite, especially to be stable in water.

Furthermore, it is advantageously possible and preferred according to the present invention that the first hard magnetic material is a moldable material comprising, or consisting of, a first hard magnetic component and a molding component, and wherein the second hard magnetic material is a moldable material comprising, or consisting of, a second hard magnetic component and a further molding component.

It is thereby advantageously possible to realize and implement the inventive rotor or rotor permanent magnet in a comparatively simple and efficient manner; especially, it is advantageously possible to provide the first hard magnetic material in the form of a mixture comprising, or consisting of, the first hard magnetic component and the molding component. Especially, the first hard magnetic component is itself the part of the first hard magnetic material that is providing its magnetic properties, whereas the molding component of the first hard magnetic material corresponds to a material - especially a thermoplastic material - by means of which it is possible to use the mixture (of the first hard magnetic material) as a moldable material. Likewise, the second hard magnetic component is itself preferably the part of the second hard magnetic material that is providing its magnetic properties, whereas the further molding component of the second hard magnetic material corresponds to a material - especially a thermoplastic material - by means of which it is possible to use the mixture (of the second hard magnetic material) as a moldable material.
In the context of the present invention, according to one embodiment of the present invention, the molding component (of the first hard magnetic material) and the further molding component (of the second hard magnetic material) are different materials that are chosen such that the resulting rotor permanent magnet (and also its connection to, or with, the shaft element of the rotor) has the appropriate mechanical properties, especially a sufficient mechanical strength, resilience and/or load capacity, especially in view of the range of used temperatures and/or in view of its sensitivity to vibrations.
However, according to another embodiment of the present invention, the molding component (of the first hard magnetic material) and the further molding component (of the second hard magnetic material) are the same material, i.e. there is just one molding component for both the first and the second hard magnetic material, and this (unique) molding component is, again, chosen such that the resulting rotor permanent magnet - comprising the first and second permanent magnet element - (and also its connection to, or with, the shaft element of the rotor) has the appropriate mechanical properties, especially a sufficient mechanical strength, resilience and/or load capacity, especially in view of the range of used temperatures and/or in view of its sensitivity to vibrations.

Furthermore, it is advantageously possible and preferred according to the present invention that the first hard magnetic component is, or comprises, at least one out of the following:
-- SmFeN,
-- NdFeB,
-- or other hard magnetic materials that are susceptible of being corroded,
and/or wherein the second hard magnetic component is, or comprises, at least one out of the following:
-- ferrite,
-- SmCo,
-- AlNiCo,
-- MnAIC,
-- one kind of iron nitrid or a plurality of iron nitrids, especially one or a plurality of: Fe₂N, Fe₃N₄, Fe₄N, Fe₇N₃ and Fe₁₆N₂,
-- or any hard magnetic material that is stable in wet environment(and, should, hence, be prevented from corrosion).

It is thereby advantageously possible to realize and implement the inventive rotor or rotor permanent magnet in a comparatively simple and efficient manner, and, especially, to chose the first and second hard magnetic material in a suitable manner in order to enhance the magnetic properties of the rotor permanent magnet and/or of the electric motor.

Furthermore, it is advantageously possible and preferred according to the present invention that the first hard magnetic material and/or the first permanent magnet element has or comprises a specific first magnetization pattern and/or wherein the second hard magnetic material and/or the second permanent magnet element has or comprises a specific second magnetization pattern.

It is thereby advantageously possible to realize and implement the inventive rotor or rotor permanent magnet in a comparatively simple and efficient manner, and, especially, to choose the first and/or second magnetization pattern in a suitable manner in order to enhance the magnetic properties of the rotor permanent magnet and/or of the electric motor.

Furthermore, the present invention relates to a pump comprising a synchronous motor according to the present invention, especially a single-phase or a three-phase synchronous motor.

Furthermore, the present invention relates to a method for manufacturing a rotor permanent magnet of a rotor for a synchronous motor according to the present invention, wherein the rotor permanent magnet comprises, or consists of, a first permanent magnet element as well as a second permanent magnet element being located on a shaft element, wherein the first permanent magnet element mainly comprises, or consists of, a first hard magnetic material and wherein the second permanent magnet element mainly comprises, or consists of, a second hard magnetic material,
wherein especially both the first hard magnetic material and the second hard magnetic material are moldable materials,
wherein the method comprises the following steps:
   -- in a first step, the first hard magnetic material is molded, especially essentially axially around the shaft element
   -- in a second step, the second hard magnetic material is molded, especially essentially axially around the shaft element and/or around the first hard magnetic material,
wherein especially a first magnetic cage is used during the first step and/or a second magnetic cage is used during the second step, wherein the first and/or the second magnetic cage realize
   -- a specific first magnetization pattern of the first hard magnetic material and/or of the first permanent magnet element, and/or
   -- a specific second magnetization pattern of the second hard magnetic material and/or of the second permanent magnet element.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWING

Figure 1 schematically and exemplarily illustrates, in a perspective view, an inventive electric motor as a synchronous motor as part of an assembly with a pump or pump element.
Figure 2 schematically and exemplarily illustrates a top view (or, rather, a sectional view with a sectional plane perpendicular to the axis of rotation) of the inventive electrical motor for the example of a single-phase synchronous motor having a stator and a rotor, wherein the stator is realized as a U-shaped laminated stator core having two poles.
Figures 3, 4 and 6 schematically and exemplarily illustrate - by means of a cross-sectional representation along the rotation axis of the rotor, respectively - different examples of the inventive rotor and rotor permanent magnet having the first permanent magnet element as well as a second permanent magnet element.
Figure 5 schematically and exemplarily illustrates the method for manufacturing the rotor permanent magnet of a rotor for a synchronous motor according to the present invention.
Figure 7 schematically and exemplarily illustrates, in a sectional view, an inventive electric motor as a synchronous motor as part of an assembly with a pump or pump element.
Figure 8 schematically and exemplarily illustrates, likewise in a sectional view and in a projection parallel to the rotor axis of rotation, an embodiment of the inventive rotor and rotor permanent magnet having the first permanent magnet element as well as a second permanent magnet element.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

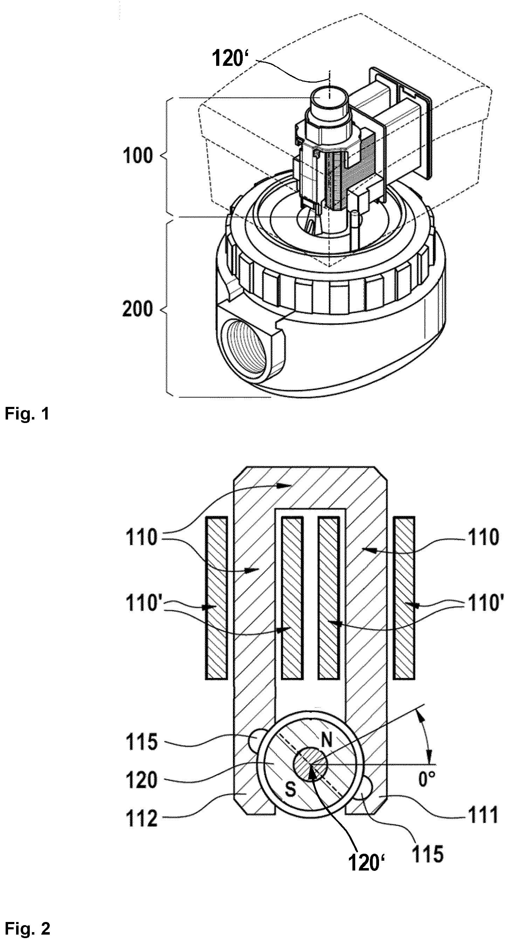

In Figure 1, a perspective view of an inventive electric motor 100 - exemplarily shown as a (single-phase) synchronous motor- is schematically represented. The synchronous motor 100 is represented as part of an assembly with a pump or pump element: In an upper part of Figure 1, the electric motor 100 is schematically represented, and in a lower part of Figure 1, the pump 200 (or pump unit 200) is schematically shown. Especially, the electric motor 100 has an axis of rotation, and the pump 200 - as a rotational pump, i.e. also having an axis of rotation - is aligned (in the lower part of Figure 1) along the axis of rotation 120' of the electric motor 100.

Figure 2 schematically and exemplarily illustrates a top view (or, rather, a sectional view with a sectional plane perpendicular to the axis of rotation 120') of the inventive electrical motor for the example of a single-phase synchronous motor having a stator and a rotor, wherein the stator is realized as a U-shaped laminated stator core having two poles. As is generally known for synchronous motors, the electric motor 100 comprises a stator and a rotor 120.
Especially, the stator is exemplarily represented as having a U-shaped laminated stator core having two poles 111, 112, the laminated stator core exemplarily having - or, being arranged with - at least one stator winding. The rotor 120 - having, or defining, the axis of rotation 120' - is arranged between the poles 111, 112 of the stator core and the rotor 120 comprises a rotor permanent magnet (not specifically shown in Figure 2). The U-shaped laminated stator core 110 is exemplarily shown as being arranged - in its parts distanced from the poles 111, 112 - with one or a plurality of stator winding 110'.

In a manner conventionally known, the poles 111, 112 might comprise (or the laminated stator core 110 might comprise) recesses 115 in order to increase the starting torque of the electric motor 100; however, this is only shown exemplarily in Figure 2. The recesses 115 form a small asymmetry in the sheet metal section of the laminated stator core 110 which creates an angular shift of the cogging torque with respect to the electrical torque and thus improves (or enables) the start-up of the motor. If present, such recesses 115 might be arranged in different manners, e.g. diametrically opposite to each other (with regard to the axis of rotation 120') and their connecting line (not represented) is offset by an angle with respect to a connecting line (not represented) between the poles 111, 112 via the axis of rotation 120' (indicated, in Figure 2, by means of "0°").

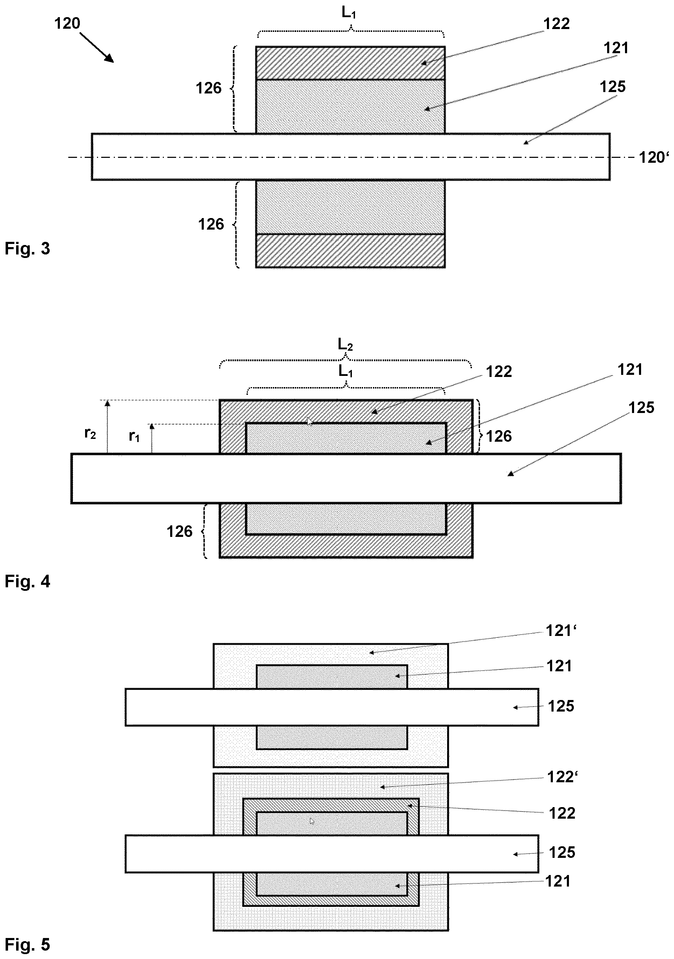

Figures 3, 4 and 6 schematically and exemplarily illustrate different examples of the inventive rotor 120. The rotor 120 comprises a (rotor) shaft element 125 and a rotor permanent magnet 126 having a first permanent magnet element 121 as well as a second permanent magnet element 122. In all embodiments according to the present invention, the first permanent magnet element 121 mainly comprises, or consists of, a first hard magnetic material and the second permanent magnet element 122 mainly comprises, or consists of, a second hard magnetic material.

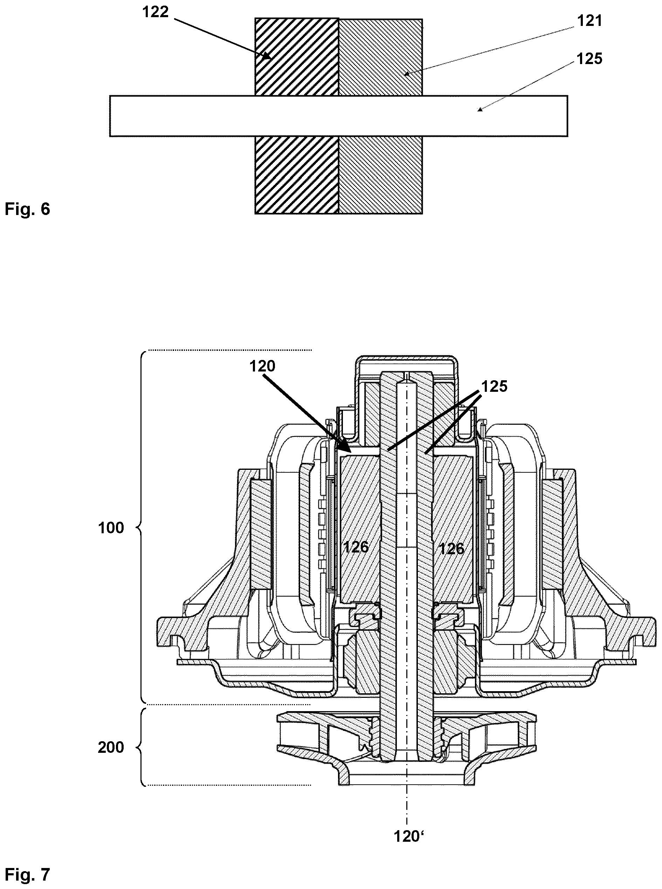

In a manner analogous to Figure 1, Figure 7 schematically and exemplarily also illustrates - by means of a cross-sectional representation along the rotation axis 120' of the rotor 120 - an inventive electric motor 100 (as a synchronous motor) as part of an assembly with a pump 200 or pump element 200.
Figure 7 specifically shows the inventive rotor 120 (assembled) as part of the electric motor 100, wherein the rotor 120 comprises the (rotor) shaft element 125 and the rotor permanent magnet 126 (having the first permanent magnet element 121 as well as a second permanent magnet element 122; however these permanent magnet elements 121, 122 are, in Figure 7, not specifically represented and designated by means of reference signs).

Especially, that the first hard magnetic material is a moldable material comprising, or consisting of, a first hard magnetic component and a molding component, and the second hard magnetic material is a moldable material comprising, or consisting of, a second hard magnetic component and a further molding component.
Especially, the first hard magnetic material is, or corresponds to a mixture comprising, or consisting of, the first hard magnetic component and the molding component. Especially, the first hard magnetic component is itself the part of the first hard magnetic material that is providing its magnetic properties, whereas the molding component of the first hard magnetic material corresponds to a material - especially a thermoplastic material - by means of which it is possible to use the mixture (of the first hard magnetic material) as a moldable material. Likewise, the second hard magnetic component is itself preferably the part of the second hard magnetic material that is providing its magnetic properties, whereas the further molding component of the second hard magnetic material corresponds to a material - especially a thermoplastic material - by means of which it is possible to use the mixture (of the second hard magnetic material) as a moldable material.
In the context of the present invention, the molding component (of the first hard magnetic material) and the further molding component (of the second hard magnetic material) might be different materials (that are especially chosen such that the resulting rotor permanent magnet 126 (and also its connection to, or with, the shaft element 125 of the rotor 120) has the appropriate mechanical properties, especially a sufficient mechanical strength. However, the molding component (of the first hard magnetic material) and the further molding component (of the second hard magnetic material) might alternatively also be the same material, i.e. there is just one molding component for both the first and the second hard magnetic material, and such (unique) molding component is, again, chosen such that the resulting rotor permanent magnet 126 - comprising the first and second permanent magnet elements 121, 122- (and also its connection to, or with, the shaft element 125 of the rotor 120) has the appropriate mechanical properties.

Especially, according to the present invention, the first hard magnetic component is or comprises at least one out of the following:
-- SmFeN,
-- NdFeB,
-- or other hard magnetic materials that are susceptible of being corroded (i.e. that are resistant to corrosion and/or are resistant to the contact with either water or (air) humidity).

Furthermore, according to the present invention, the second hard magnetic component is or comprises at least one out of the following:
-- ferrite,
-- SmCo, AlNiCo, MnAIC,
-- one kind of iron nitrid or a plurality of iron nitrids, especially one or a plurality of: Fe2N, Fe3N4, Fe4N, Fe7N3 and Fe16N2,
-- or any hard magnetic material that is stable in wet environment (and, should, hence, be prevented from corrosion).

Figure 3 shows - by means of a cross-sectional representation along the rotation axis 120' of the rotor 120 - an embodiment according to the present invention where the shaft element 125 extends, along the rotation axis 120' of the rotor 120, and, thus, has a certain length (of the shaft element 125). In the embodiment shown in Figure 3, the rotor permanent magnet 126 - i.e. both the first permanent magnet element 121 and the second permanent magnet element 122 thereof - extend along a length L₁ parallel to the rotor axis of rotation 120', and this length L₁ is inferior to the length of the shaft element 125, i.e. the length L₁ of extension of both the first and the second permanent magnet elements 121, 122 only extend along a part (length L₁) of the (total) length of the shaft element 125.
Furthermore, Figure 3 shows that the rotor permanent magnet 126 is arranged concentrically around the shaft element 125: The first permanent magnet element 121 is shaped essentially cylindrically (or, rather, as a cylindrical shell), especially around an outer cylindrical or essentially cylindrical surface of the shaft element 125. Especially the first permanent magnet element 121 radially extends in an area of and/or around the shaft element 125 corresponding to a first maximum radius r₁. Likewise, the second permanent magnet element 122 is shaped cylindrically, especially around an outer essentially cylindrical or essentially cylindrical surface of the first permanent magnet element 121, and (radially) in an area around the first permanent magnet element 121 corresponding to a second maximum radius r₂.

Figure 4 shows - likewise by means of a cross-sectional representation along the rotation axis 120' of the rotor 120 - a further embodiment according to the present invention where the rotor permanent magnet 126 is, again, arranged essentially concentrically around the shaft element 125: The first permanent magnet element 121 is shaped essentially cylindrically (or, rather, as a cylindrical shell), especially around an outer cylindrical or essentially cylindrical surface of the shaft element 125: radially, the first permanent magnet element 121 extends in an area of and/or around the shaft element 125 corresponding to a first maximum radius r₁, and, axially, it extends along the length L₁ parallel to the rotor axis of rotation 120'. The second permanent magnet element 122 extends, axially, parallel to the rotor axis of rotation 120', along a total length of extension L₂ of the second permanent magnet element 122 (the length of extension of the second permanent magnet element 122 exceeds the corresponding length of extension L₁ of the first permanent magnet element 121); along the length of extension L₁ of the first permanent magnet element 121, the second permanent magnet element 122 is shaped cylindrically (or, rather, as a cylindrical shell), especially around an outer cylindrical or essentially cylindrical surface of the first permanent magnet element 121, and the second permanent magnet element 122 extends, radially, in an area around the first permanent magnet element 121 corresponding to a second maximum radius r₂. Beyond the first permanent magnet element 121 (parallel to the rotor axis of rotation 120') - and especially at both ends of the first permanent magnet element 121 -, the second permanent magnet element 122 is likewise shaped cylindrically (or, rather, as a cylindrical shell), but around an outer cylindrical or essentially cylindrical surface of the shaft element 125, and, radially, likewise extends in an area around the shaft element 125 corresponding to the second maximum radius r₂.
Thereby, the second permanent magnet element 122 completely surrounds (or encloses) the first permanent magnet element 121, and, thus, is able to shield or protect the first permanent magnet element 121 from, e.g., exterior fluids, especially water and/or humidity, and it is thereby advantageously possible to avoid corrosion of parts of the first permanent magnet element 121, especially the first hard magnetic material or component thereof.

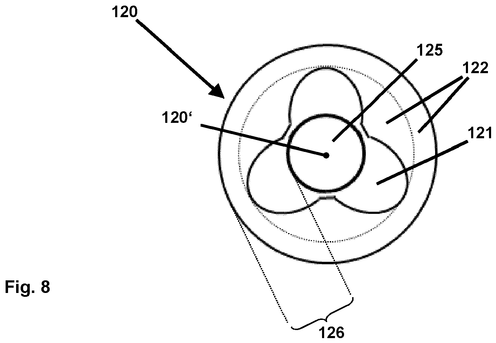

It is to be understood that - both regarding the embodiment shown in Figure 3 and the embodiment shown in Figure 4 - the surface (at least along a part of, or along the complete, length of extension L₁ of the first permanent magnet element 121) of the shaft element 125 (i.e. the interface between the shaft element 125 and the first permanent magnet element 121) might be cylindrical or, at least, essentially cylindrical, but does not need to be: the outer surface of the shaft element 125 might as well comprise (arbitrarily shaped) recesses and protrusions (e.g. in the manner of a cog wheel), e.g. in order to provide an increased attachment of the rotor permanent magnet 126 to the shaft element 125. Likewise, it is also to be understood that - both regarding the embodiment shown in Figure 3 and the embodiment shown in Figure 4 - the (radially outer) surface (at least along a part of, or along the complete, length of extension L₁ of the first permanent magnet element 121) of the first permanent magnet element 121 (i.e. the interface between the first permanent magnet element 121 and the second permanent magnet element 122) might be cylindrical or, at least, essentially cylindrical, but does not need to be: the outer surface of the first permanent magnet element 121 might as well comprise (arbitrarily shaped) recesses and protrusions (e.g. in the manner of a cog wheel), e.g. in order to provide an increased attachment of the second permanent magnet element 122 to the first permanent magnet element 121 and/or in order to confer - to the rotor permanent magnet 126 - specific and advantageous magnetic properties and/or a specific orientation of the magnetic field resulting from the location and/or the shape of the first and second permanent magnet element 121, 122, respectively, and/or from their interaction.
An example of such a configuration (i.e. where the (radially outer) surface of the first permanent magnet element 121, i.e. the interface between the first and second permanent magnet element 121, 122, is not cylindrical (or essentially cylindrical)) is schematically and exemplarily illustrated (in a sectional view and in a projection parallel to the rotor axis of rotation 120') in Figure 8: As can be seen from Figure 8 and the contour or profile of the (radially) outer surface of the first permanent magnet element 121, this contour or profile comprises radially outward reaching protrusions (at three specific angles around the rotor axis of rotation 120' - i.e. around the rotor axis of rotation 120', these three angles of maximum radial extension of the first permanent magnet element 121 are roughly 120° spaced). However, a different number of such protrusions (around the rotor axis of rotation 120') is, likewise, possible, e.g. only two protrusions, or four protrusions, or five protrusions or six protrusions or more than six protrusions. Furthermore, the (contour or profile of the) protrusions might be differently shaped than shown in the representation of Figure 8, e.g. having the profile of a triangle, or of a square, or of a pentagon or of a hexagon.

Figure 6 shows - likewise by means of a cross-sectional representation along the rotation axis 120' of the rotor 120 - still another embodiment according to the present invention where the first and second hard magnetic materials (or the first and second permanent magnet element 121, 122) are located axially adjacent along a part of the shaft element 125 and parallel to the rotor axis of rotation 120'. Especially according to the representation of Figure 6, the radial extension of both the first and the second hard magnetic materials (or first and second permanent magnet element 121, 122) are essentially identical, and the first and second permanent magnet elements 121, 122 are located adjacent along the shaft element 125 of the rotor 120.

Figure 5, schematically and exemplarily illustrates the method for manufacturing the rotor permanent magnet 126 of the rotor 120 for a synchronous motor according to the present invention: According to the present invention, this method comprises the steps of the first hard magnetic material is molded, especially essentially axially around the shaft element 125, and, furthermore, the step of the second hard magnetic material being molded, especially essentially axially around the shaft element 125 and/or around the first hard magnetic material.
These steps are schematically shown in the upper and lower parts of Figure 6: The upper part shows the shaft element 125 being positioned inside a first tool comprising a first magnetic cage 121'. By means of the first tool, the extension of the first permanent magnet element 121 is defined, and the first permanent magnet element 121 is realized by means injection molding the first hard magnetic material. The lower part shows the shaft element 125 (together with the first hard magnetic material or the first permanent magnet element 121 already molded, i.e. being in place) being positioned inside a second tool comprising a second magnetic cage 122'. By means of the second tool, the extension of the second permanent magnet element 122 is defined, and the first permanent magnet element 122 is realized by means injection molding the second hard magnetic material.
Especially according to the present invention, the first magnetic cage 121' is used during the first step and/or the second magnetic cage 122' is used during the second step in order to realize respective specific first and/or specific second magnetization pattern of (or within) the first and/or second hard magnetic material and/or of (or within) the first and/or second permanent magnet elements 121, 122. It is thereby advantageously possible to realize a specific first magnetization pattern within the first hard magnetic material and/or the first permanent magnet element 121 and/or a specific second magnetization pattern within the second hard magnetic material and/or the second permanent magnet element 122 in a manner such as to confer- to the rotor permanent magnet 126 - specific and advantageous magnetic properties and/or a specific orientation of the magnetic field resulting from the location and/or the shape of the first and second permanent magnet element 121, 122, respectively, and/or from their interaction.

## Claims

1. Synchronous motor (100) comprising at least one stator and a rotor (120), the rotor (120) comprising a rotor permanent magnet (126),
**characterized in that** the rotor (120) comprises - besides the rotor permanent magnet (126) - a shaft element (125), wherein the rotor permanent magnet (126) comprises, or consists of, a first permanent magnet element (121) as well as a second permanent magnet element (122), wherein the first permanent magnet element (121) mainly comprises, or consists of, a first hard magnetic material and wherein the second permanent magnet element (122) mainly comprises, or consists of, a second hard magnetic material.

2. Synchronous motor (100) according to claim 1, wherein both the first hard magnetic material and the second hard magnetic material are moldable materials.

3. Synchronous motor (100) according to one of the preceding claims, wherein the first and second hard magnetic materials are located axially adjacent along a part of the shaft element (125) and parallel to the rotor axis of rotation (120'), wherein especially the radial extension of both the first and the second hard magnetic materials is essentially identical.

4. Synchronous motor (100) according to one of the preceding claims, wherein the first hard magnetic material is exclusively located, with regard to the rotor axis of rotation (120'), in a radially inner area of the rotor permanent magnet (126) and wherein the second hard magnetic material is mainly located, with regard to the rotor axis of rotation (120'), in a radially outer area of the rotor permanent magnet (126),
wherein especially, along a radially outer surface of the first hard magnetic material, the second hard magnetic material is radially adjacent to the first hard magnetic material.

5. Synchronous motor (100) according to one of the preceding claims, wherein the first permanent magnet element (121) is shaped essentially cylindrically, especially around an outer cylindrical or essentially cylindrical surface of the shaft element (125), in an area of and/or around the shaft element (125) corresponding to a first maximum radius (r₁), and wherein the second permanent magnet element (122) is shaped cylindrically, especially around an outer essentially cylindrical or essentially cylindrical surface of the first permanent magnet element (121), in an area around the first permanent magnet element (121) corresponding to a second maximum radius (r₂),
wherein especially both the first permanent magnet element (121) and the second permanent magnet element (122) extend along a certain length (L₁) parallel to the rotor axis of rotation (120'), this length (L₁) especially being inferior to the length of the shaft element (125).

6. Synchronous motor (100) according to one of the preceding claims, wherein the first permanent magnet element (121) is shaped essentially cylindrically, especially around an outer cylindrical or essentially cylindrical surface of the shaft element (125), in an area of and/or around the shaft element (125) corresponding to a first maximum radius (r₁), wherein the first permanent magnet element (121) extends along a certain length (L₁) parallel to the rotor axis of rotation (120'), and wherein the second permanent magnet element (122) extends, parallel to the rotor axis of rotation (120'), along a total length of extension (L₂) of the second permanent magnet element (122), wherein
-- along the length of extension (L₁) of the first permanent magnet element (121) parallel to the rotor axis of rotation (120'), the second permanent magnet element (122) is shaped cylindrically, especially around an outer cylindrical or essentially cylindrical surface of the first permanent magnet element (121), in an area around the first permanent magnet element (121) corresponding to a second maximum radius (r₂), and
-- extending beyond the first permanent magnet element (121) parallel to the rotor axis of rotation (120') - especially at both ends of the first permanent magnet element (121) -, the second permanent magnet element (122) is shaped cylindrically, especially around an outer cylindrical or essentially cylindrical surface of the shaft element (125) likewise in an area around the shaft element (125) corresponding to the second maximum radius (r₂).

7. Synchronous motor (100) according to one of the preceding claims, wherein - with the exception of the shaft element (125) - the second permanent magnet element (122) completely surrounds the first permanent magnet element (121), wherein especially - and again with the exception of the shaft element (125) - the second hard magnetic material completely surrounds the first hard magnetic material,
wherein especially the first hard magnetic material is thereby protected, or sealed, from external fluids, especially from external water or humidity in external air.

8. Synchronous motor (100) according to one of the preceding claims, wherein the first hard magnetic material is a moldable material comprising, or consisting of, a first hard magnetic component and a molding component, and wherein the second hard magnetic material is a moldable material comprising, or consisting of, a second hard magnetic component and a further molding component.

9. Synchronous motor (100) according to one of the preceding claims, wherein the first hard magnetic component is or comprises at least one out of the following:
-- SmFeN,
-- NdFeB,
-- or other hard magnetic materials that are susceptible of being corroded, and/or wherein the second hard magnetic component is or comprises at least one out of the following:
-- ferrite,
-- SmCo, AlNiCo, MnAIC,
-- one kind of iron nitrid or a plurality of iron nitrids, especially one or a plurality of: Fe₂N, Fe₃N₄, Fe₄N, Fe₇N₃ and Fe₁₆N₂,
-- or any hard magnetic material that is stable in wet environment.

10. Synchronous motor (100) according to one of the preceding claims, wherein the first hard magnetic material and/or the first permanent magnet element (121) has or comprises a specific first magnetization pattern and/or wherein the second hard magnetic material and/or the second permanent magnet element (122) has or comprises a specific second magnetization pattern.

11. Pump (200) comprising a synchronous motor (100) according to one of the preceding claims, especially a single-phase or a three-phase synchronous motor (100).

12. Method for manufacturing a rotor permanent magnet (126) of a rotor (120) for a synchronous motor (100) according to one of the preceding claims,
wherein the rotor permanent magnet (126) comprises, or consists of, a first permanent magnet element (121) as well as a second permanent magnet element (122) being located on a shaft element (125), wherein the first permanent magnet element (121) mainly comprises, or consists of, a first hard magnetic material and wherein the second permanent magnet element (122) mainly comprises, or consists of, a second hard magnetic material,
wherein both the first hard magnetic material and the second hard magnetic material are moldable materials,
wherein the method comprises the following steps:
-- in a first step, the first hard magnetic material is molded, especially essentially axially around the shaft element (125)
-- in a second step, the second hard magnetic material is molded, especially essentially axially around the shaft element (125) and/or around the first hard magnetic material,
wherein especially a first magnetic cage (121') is used during the first step and/or a second magnetic cage (122') is used during the second step, wherein the first and/or the second magnetic cage (121', 122') realize
-- a specific first magnetization pattern of the first hard magnetic material and/or of the first permanent magnet element (121), and/or
-- a specific second magnetization pattern of the second hard magnetic material and/or of the second permanent magnet element (122).

## Amended claims

### Amended claims in accordance with Rule 137(2) EPC.

1. Synchronous motor (100) comprising at least one stator and a rotor (120), the rotor (120) comprising a rotor permanent magnet (126),
**characterized in that** the rotor (120) comprises - besides the rotor permanent magnet (126) - a shaft element (125), wherein the rotor permanent magnet (126) comprises, or consists of, a first permanent magnet element (121) as well as a second permanent magnet element (122), wherein the first permanent magnet element (121) mainly comprises, or consists of, a first hard magnetic material and wherein the second permanent magnet element (122) mainly comprises, or consists of, a second hard magnetic material,
wherein the first hard magnetic material is exclusively located, with regard to the rotor axis of rotation (120'), in a radially inner area of the rotor permanent magnet (126) and wherein the second hard magnetic material is mainly located, with regard to the rotor axis of rotation (120'), in a radially outer area of the rotor permanent magnet (126),
wherein the first hard magnetic component is or comprises at least one out of the following:
-- SmFeN,
-- NdFeB,
-- or other hard magnetic materials that are susceptible of being corroded,
and/or wherein the second hard magnetic component is or comprises at least one out of the following:
-- ferrite,
-- SmCo, AlNiCo, MnAlC,
-- one kind of iron nitrid or a plurality of iron nitrids
-- or any hard magnetic material that is stable in wet environment.

2. Synchronous motor (100) according to claim 1, wherein both the first hard magnetic material and the second hard magnetic material are moldable materials.

3. Synchronous motor (100) according to one of the preceding claims, wherein the first and second hard magnetic materials are located axially adjacent along a part of the shaft element (125) and parallel to the rotor axis of rotation (120'),
wherein especially the radial extension of both the first and the second hard magnetic materials is essentially identical.

4. Synchronous motor (100) according to one of the preceding claims
wherein especially, along a radially outer surface of the first hard magnetic material, the second hard magnetic material is radially adjacent to the first hard magnetic material.

5. Synchronous motor (100) according to one of the preceding claims, wherein the first permanent magnet element (121) is shaped essentially cylindrically, especially around an outer cylindrical or essentially cylindrical surface of the shaft element (125), in an area of and/or around the shaft element (125) corresponding to a first maximum radius (r₁), and wherein the second permanent magnet element (122) is shaped cylindrically, especially around an outer essentially cylindrical or essentially cylindrical surface of the first permanent magnet element (121), in an area around the first permanent magnet element (121) corresponding to a second maximum radius (r₂),
wherein especially both the first permanent magnet element (121) and the second permanent magnet element (122) extend along a certain length (L₁) parallel to the rotor axis of rotation (120'), this length (L₁) especially being inferior to the length of the shaft element (125).

6. Synchronous motor (100) according to one of the preceding claims, wherein the first permanent magnet element (121) is shaped essentially cylindrically, especially around an outer cylindrical or essentially cylindrical surface of the shaft element (125), in an area of and/or around the shaft element (125) corresponding to a first maximum radius (r₁), wherein the first permanent magnet element (121) extends along a certain length (L₁) parallel to the rotor axis of rotation (120'), and wherein the second permanent magnet element (122) extends, parallel to the rotor axis of rotation (120'), along a total length of extension (L₂) of the second permanent magnet element (122), wherein
-- along the length of extension (L₁) of the first permanent magnet element (121) parallel to the rotor axis of rotation (120'), the second permanent magnet element (122) is shaped cylindrically, especially around an outer cylindrical or essentially cylindrical surface of the first permanent magnet element (121), in an area around the first permanent magnet element (121) corresponding to a second maximum radius (r₂), and
-- extending beyond the first permanent magnet element (121) parallel to the rotor axis of rotation (120') - especially at both ends of the first permanent magnet element (121) -, the second permanent magnet element (122) is shaped cylindrically, especially around an outer cylindrical or essentially cylindrical surface of the shaft element (125) likewise in an area around the shaft element (125) corresponding to the second maximum radius (r₂).

7. Synchronous motor (100) according to one of the preceding claims, wherein - with the exception of the shaft element (125) - the second permanent magnet element (122) completely surrounds the first permanent magnet element (121),
wherein especially - and again with the exception of the shaft element (125) - the second hard magnetic material completely surrounds the first hard magnetic material, wherein especially the first hard magnetic material is thereby protected, or sealed, from external fluids, especially from external water or humidity in external air.

8. Synchronous motor (100) according to one of the preceding claims, wherein the first hard magnetic material is a moldable material comprising, or consisting of, a first hard magnetic component and a molding component, and wherein the second hard magnetic material is a moldable material comprising, or consisting of, a second hard magnetic component and a further molding component.

9. Synchronous motor (100) according to one of the preceding claims, wherein the first hard magnetic material and/or the first permanent magnet element (121) has or comprises a specific first magnetization pattern and/or wherein the second hard magnetic material and/or the second permanent magnet element (122) has or comprises a specific second magnetization pattern.

10. Pump (200) comprising a synchronous motor (100) according to one of the preceding claims, especially a single-phase or a three-phase synchronous motor (100).

11. Method for manufacturing a rotor permanent magnet (126) of a rotor (120) for a synchronous motor (100) according to one of the preceding claims,
wherein the rotor permanent magnet (126) comprises, or consists of, a first permanent magnet element (121) as well as a second permanent magnet element (122) being located on a shaft element (125), wherein the first permanent magnet element (121) mainly comprises, or consists of, a first hard magnetic material and wherein the second permanent magnet element (122) mainly comprises, or consists of, a second hard magnetic material,
wherein both the first hard magnetic material and the second hard magnetic material are moldable materials,
wherein the method comprises the following steps:
-- in a first step, the first hard magnetic material is molded, especially essentially axially around the shaft element (125)
-- in a second step, the second hard magnetic material is molded, especially essentially axially around the shaft element (125) and/or around the first hard magnetic material,
wherein especially a first magnetic cage (121') is used during the first step and/or a second magnetic cage (122') is used during the second step, wherein the first and/or the second magnetic cage (121', 122') realize
-- a specific first magnetization pattern of the first hard magnetic material and/or of the first permanent magnet element (121), and/or
-- a specific second magnetization pattern of the second hard magnetic material and/or of the second permanent magnet element (122).
